(19) Europäisches Patentamt

European Patent Office

Office européen des brevets

(11) **EP 0 770 211 B1**

(12) **EUROPEAN PATENT SPECIFICATION**

(45) Date of publication and mention
of the grant of the patent:
**31.07.2002 Bulletin 2002/31**

(51) Int Cl.⁷: **G01N 27/416**

(86) International application number:
**PCT/GB96/01110**

(21) Application number: **96913638.1**

(22) Date of filing: **09.05.1996**

(87) International publication number:
**WO 96/35944 (14.11.1996 Gazette 1996/50)**

(54) **OXYGEN SENSOR**

SAUERSTOFF SENSOR

DETECTEUR D'OXYGENE

(84) Designated Contracting States:
**DE FR GB NL**

(30) Priority: **11.05.1995 GB 9509549**

(43) Date of publication of application:
**02.05.1997 Bulletin 1997/18**

(73) Proprietors:
• **Radford, Richard**
  **Winthorpe Newark Notts. NG24 2PG (GB)**
• **Peel, David**
  **Southwell, Notts. NG25 0HA (GB)**
• **Baker, David**
  **Kingshaven, Manfield, Notts. NG18 4AZ (GB)**

(72) Inventors:
• **Radford, Richard**
  **Winthorpe Newark Notts. NG24 2PG (GB)**
• **Peel, David**
  **Southwell, Notts. NG25 0HA (GB)**
• **Baker, David**
  **Kingshaven, Manfield, Notts. NG18 4AZ (GB)**

(74) Representative: **Bryer, Kenneth Robert**
  **K.R. Bryer & Co.**
  **7 Gay Street**
  **Bath BA1 2PH (GB)**

(56) References cited:
  **GB-A- 2 284 059**          **US-A- 5 262 034**

## Description

This invention relates to an oxygen sensor, in particular to an oxygen sensor based on Galvanic Fuel Cell technology.

Oxygen sensors are used to monitor the concentration of atmospheric oxygen in a variety of clinical, industrial and commercial applications. One clinical application is the monitoring of oxygen in incubators for prematurely-born infants. Failure to maintain the correct partial pressure of oxygen in such an environment can lead to the patient being over- or under-oxygenated.

The effects of hypoxia and hyperoxia may be extremely serious, especially in premature infants, e.g. leading to brain damage and retinopathy respectively.

Fuel cell technology has been used as the basis of oxygen measurement in clinical applications for many years. Fuel cells offer an easy design solution, providing development engineers with a transducer that offers a small electrical signal directly proportional to the partial pressure of oxygen in the gas under measurement.

The Fuel cell is an electrochemical transducer or energy converter. The fuel in the case of an oxygen sensor, is oxygen without which the cell will not operate. The fuel cell operates on the principle that oxygen is reduced at the sensing electrode, resulting in the generation of a current directly proportional to the number of oxygen molecules present in the electrolyte. The flow of oxygen molecules is controlled by a semi-porous plastic membrane. The rate of diffusion through this membrane is proportional to the partial pressure differential across it. Once diffused, the oxygen molecules dissolve into the electrolyte solution and migrate to the surface of the sensing electrode where they become absorbed to form an activated species capable of undergoing reduction.

Most commonly, the anode material is lead, in which case the general cell reactions are:

Sensing electrode (cathode)

$$4\ e^- + 2H_2O + O_2 \rightarrow 4OH^-$$

Counter electrode (anode)

$$4\ OH^- + 2Pb \rightarrow 2PbO + 2H_2O + 4e^-$$

Overall cell reaction

$$2Pb + O_2 \rightarrow 2PbO$$

As a result of the oxidisation of Pb (anode material), four electrons are generated for every molecule of oxygen. These four electrons are then utilised for the reduction of oxygen at the cathode. It is this flow of electrons from one electrode to the other that constitutes an electric current. In the absence of oxygen, no oxidisation can take place and no current is produced.

Oxygen sensors of the type described above suffer from the disadvantage that oxidation of the lead anode is not reversible, and when insufficient surface area remains for further oxidation, electron flow cannot be maintained. This causes the fuel cell to provide an output that is no longer proportional to the partial pressure of oxygen and therefore can no longer be relied upon. The period over which this erratic phenomenon occurs is dependant upon an umber of factors including the way in which the anode is constructed.

Commonly, two or more substantially equivalent, independent sensors are used in combination to provide measurement and monitoring signals to the host equipment. Whereby the depletion of one of the cells outputs is used by the host equipment to provide the user with an indication that the measurement signal is no longer reliable. However, this results in notification to the user only after the period of unstable output has occurred and after one of the sensors has failed. Because the sensors are inherently substantially equivalent and are experiencing identical environmental conditions and oxygen concentrations it is not determinable which sensor will fail first.

US-A-5 405 512 discloses prior art arrangements including a dual cell arrangement, i.e. one having two sets of electrodes and arrangements having a common anode or common cathode with multiple cathodes or anodes all sharing an electrolytic solution. An arrangement in which one anode may be smaller than another is stated to be ineffective in reliably determining the end life of the arrangement.

US 5 405 512 provides a cell having two or more identical anodes and a common cathode and a sensing circuit that switches in sequence between the anodes. The circuit detects a drop in current at an anode as an indication of the relative deterioration of that anode but cannot detect a variation in current if the anodes are depleting at the same rate.

There has now been devised an improved form of oxygen sensor which can overcome or substantially mitigate the above mentioned disadvantages.

According to the present invention, there is provided an oxygen sensor comprising an oxygen sensor comprising first and second cells each cell having an oxygen permeable membrane in contact with the environment to be sensed and an electrolytic solution, a cathode and an oxidisable anode in contact with the said electrolytic solution wherein the cells are substantially identical and independent and in that the first anode is substantially smaller in surface area than the second anode whereby the depletion of the first anode occurs before the depletion of the second anode .

The oxygen sensor according to the invention is advantageous primarily in that depletion of the monitoring element provides an early warning of depletion for the measuring element, enabling the sensor to be replaced before such depletion of the measuring element. This significantly reduces the possibility of host equipment receiving a "measuring" signal from a sensor or element of a sensor that is in its depletion phase and hence significantly reduces the attendant risk of hypoxia and hyperoxia.

Preferably, an electronic comparator circuit is provided to compare the output voltage of the second cell (hereinafter the measuring element) and the first cell (hereinafter the monitoring element). The difference is preferably amplified and fed to comparators. Most preferably, a voltage difference of more than a first predetermined amount (e.g. a difference of more than 4%) triggers a visual or audio alarm, such as a warning lamp and/or a buzzer, to indicate to the user that the monitoring element is in depletion phase and that depletion of the measuring element is also therefore imminent. If the difference exceeds a (greater) second predetermined amount (e.g. 8%) then the control circuitry may entirely disable the apparatus.

According to an aspect of the present invention there is provided a method of operating an oxygen sensor of the type comprising first and second cells each cell having an oxygen permeable membrane in contact with the environment to be sensed and an electrolytic solution, a cathode and an oxidisable anode in contact with the said electrolytic solution, wherein the cells are substantially identical and independent and in that the first anode is substantially smaller in surface area than the second anode whereby the depletion of the first anode occurs before the depletion of the second anode and in which an output from each of the said first and second cells is detected, the difference between the said outputs is monitored and a signal is issued when the difference becomes greater than a first predetermined value.

The monitoring element may be arranged to become depleted before the measuring element by virtue of the monitoring element anode having a smaller surface area than that of the measuring element. For instance, relative to the measuring element anode the surface area of the monitoring element anode may be between 80% and 98%, more preferably between 90% and 98%, e.g. about 95% for fuel cells designed to have a life expectancy of 400,000 oxygen percentage hours.

Where the measuring element and monitoring element cells differ in the surface area of the anode, they are preferably identical in all other respects such as the nature of the cathode, permeable membrane, electrolyte etc.

The anodes of the measuring element and the monitoring element are preferably of lead. The cathodes of the measuring element and the monitoring element are preferably of gold.

All components of the measuring element and the monitoring element, including the electrolyte, are preferably independent. Separation of the electrolytes of the two elements ensures that, during depletion of the monitoring anode, its cathode cannot derive ion flow from the measuring anode.

The measuring element and the monitoring element are preferably housed within a single unit, through they may alternatively be separate units mounted within the oxygenated environment.

The invention will now be described in greater detail, by way of illustration only, with reference to the accompanying drawings, in which:-

Figure 1 shows a schematic sectional side view of an oxygen sensor according to the invention;
Figure 2 shows schematically the outputs of the sensor of Figure 1 during prolonged usage; and
Figure 3 shows an electronic comparator circuit in conjunction with the sensor of Figure 1.

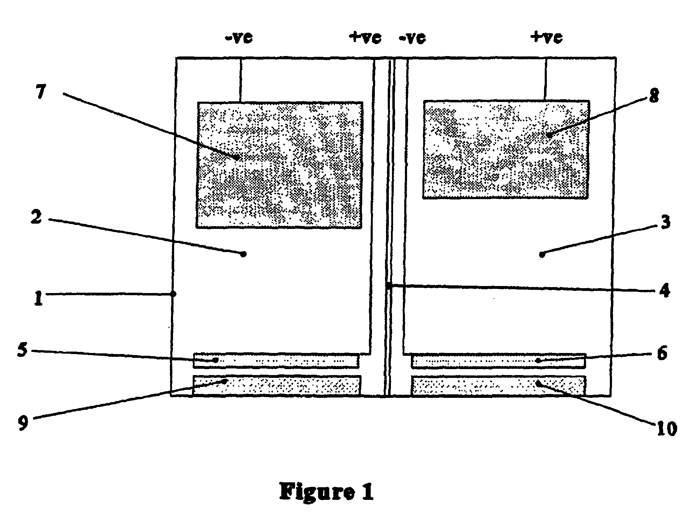

Referring first to Figure 1, an oxygen sensor for use in clinical applications, e.g. in controlling the oxygen partial pressure in an incubator for premature babies, is generally designated.

The sensor is divided into two compartments by an internal barrier. Each compartment constitutes a fuel cell and contains an identical gold cathode and a lead anode. The cells are filled with identical electrolyte solutions and have identical oxygen-permeable membrane windows adjacent to the respective cathodes.

The cells are identical save that the anode of the right-hand (as viewed in Figure 1) cell has a surface area which is 95% that of the anode of the left-hand cell. In use, oxygen molecules diffuse through the membranes dissolve in the electrolyte and migrate to the surface of the respective cathodes where they undergo reduction. The cell reactions are as given above and reduction of the oxygen is accompanied by oxidation of the lead anodes.

Initially, the rate of reaction in both cells is the same and the output voltages of the cells are substantially the same. However, after prolonged use the surfaces of the lead anodes become progressively oxidised and the area available for further oxidation becomes depleted. In these circumstances, flow of electrons across the cells cannot be maintained. The output voltage of the cells falls even where the oxygen concentration is constant.

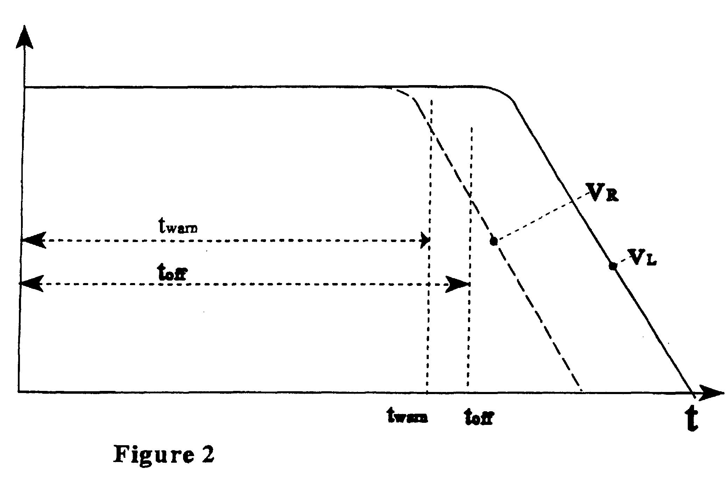

Because the surface area of the anode of the right-hand cell is less than that of the left-hand anode the anode becomes depleted sooner than the other anode . Figure 2 shows typical plots of output voltage against time for the two cells at constant oxygen partial pressure. Initially, the output voltages are adjusted, through compensation resistance where this is necessary, to be substantially equal and constant. When depletion of the right-hand anode occurs, the output voltage ($V_R$) falls sharply (broken line in Figure 2), as does the output voltage ($V_L$) of the left-hand cell a short time later.

In the sensor according to the invention, the left-hand cell is used to measure the oxygen partial pressure in, for example an incubator for premature babies. The rate of diffusion of oxygen through the membrane and hence the output voltage of the cell is proportional to the oxygen partial pressure within the incubator. The right-hand cell is used to check the integrity of the measured oxygen partial pressure.

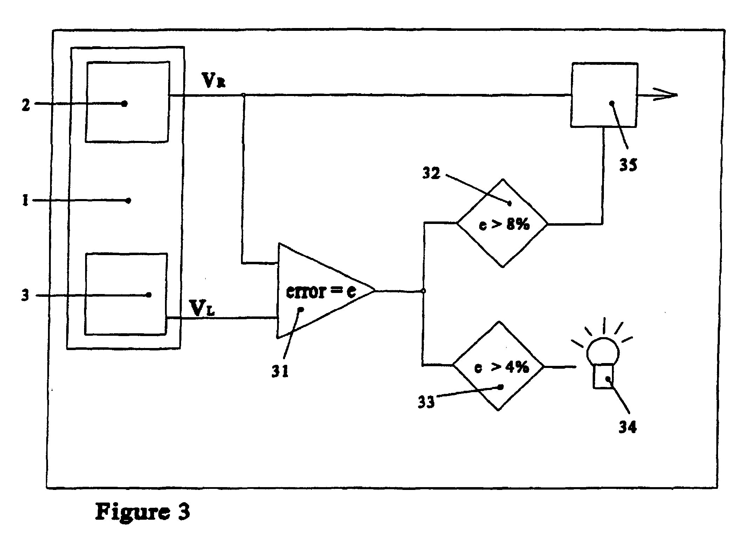

As shown in Figure 3, the outputs of the cells are fed to an amplifier and the difference or error (e) is calculated. The error voltage is fed to a series of comparators which compare the error (e) to a preset value, e.g. 4% of the amplified output of the left-hand cell . If the error (e) is less than the preset value then the output voltage $V_R$ is used to control supply of oxygen to the incubator. Should the error (e) exceed the preset value then a lamp is illuminated to indicate that depletion of the right-hand cell has begun and depletion of the left-hand cell is imminent. The user should at this point replace the sensor. If this is not done then the error (e) increases until a second preset value is reached (e.g. e = 8%) at which the comparator actuates a switch which disables the sensor. The sensor is thus useable whilst the error (e) is less than the first preset value. When that limit is exceeded (at the time $t_{WARN}$ shown in Figure 2) a warning is given to the user, but the sensor remains operational for a short period until a time $t_{off}$ (see Figure 2) at which the error (e) exceeds the second preset value.

## Claims

1. An oxygen sensor comprising first and second cells (2, 3), each cell having an oxygen permeable membrane (9, 10) in contact with an environment to be sensed and an electrolytic solution, a cathode (5, 6) and an oxidisable anode (7, 8) in contact with the said electrolytic solution wherein the cells (2, 3) are substantially identical and independent and in that the first anode (8) is substantially smaller in surface area than the second anode (7) whereby the depletion of the first anode (8) occurs before the depletion of the second anode (7).

2. A sensor according to Claim 1, **characterised in that** the surface area of the first anode (8) is 80 to 98% of that of the second anode (7).

3. A sensor according to any preceding Claim, **characterised in that** each anode (7, 8) is made of lead and each cathode (5, 6) is made of gold.

4. A sensor according to any preceding Claim, **characterised in that** it further comprises electronic means for determining the difference between the outputs of each cell (2, 3).

5. A sensor according to Claim 4, **characterised in that** it further comprises means for signaling depletion of the first anode (8) when the said difference is greater than a first predetermined value.

6. A sensor according to Claim 4 or Claim 5, **characterised in that** it further comprises means for disabling the output from the second cell (2) when the said difference is greater than a second predetermined value.

7. A sensor according to Claims 4 to 6, **characterised in that** it further comprises control means whereby the output from the said first cell (3) controls a supply of oxygen to an enclosed environment with which the sensor is in contact when the said difference is less than the first predetermined value.

8. A sensor according to any preceding Claim, **characterised in that** each cell (2, 3) produces a voltage output.

9. A sensor according to any preceding Claim, **characterised in that** it further comprises a housing having first and second compartments in which the said first and second fuel cells (2, 3) are respectively supported.

10. A method of operating an oxygen sensor of the type comprising first and second cells (2, 3), each cell having an oxygen permeable membrane (9, 10) in contact with an environment to be sensed and an electrolytic solution, a cathode (5, 6) and an oxidisable anode (7, 8) in contact with the said electrolytic solution, wherein the cells (2, 3) are substantially identical and independent and in that the first anode (8) is substantially smaller in surface area than the second anode (7) whereby the depletion of the first anode (8) occurs before the depletion of the second anode (7), and in which an output from each of the said first and second cells is detected, the difference between the said outputs is monitored and a signal is issued when the difference becomes greater than a first predetermined value.

11. A method according to Claim 10, **characterised in that** the output from the second cell (2) is disabled when the difference is greater than a second predetermined value.

12. A method according to Claims 10 or Claim 11, **characterised in that** the said first and second values are a predetermined proportion of the output of the second cell (2).

**Patentansprüche**

1. Sauerstoffsensor bestehend aus einer ersten und einer zweiten Zelle (2, 3), wobei jede Zelle eine sauerstoffdurchlässige Membran (9, 10), die mit einer Umgebung in Kontakt steht, die erfasst werden soll, sowie eine elektrolytische Lösung, eine Kathode (5, 6) und eine oxydierbare Anode (7, 8), die in Kontakt mit der elektrolytischen Lösung stehen, besitzt, wobei die Zellen (2, 3) im wesentlichen identisch und unabhängig sind und wobei die erste Anode (8) im Oberflächenbereich wesentlich kleiner ist, als die zweite Anode (7), wodurch die Erschöpfung der ersten Anode (8) vor der Erschöpfung der zweiten Anode (7) stattfindet.

2. Sensor gemäß Anspruch 1, **dadurch gekennzeichnet, dass** der Oberflächenbereich der ersten Anode (8) 80 bis 98 % dessen der zweiten Anode (7) beträgt.

3. Sensor nach einem der vorhergehenden Ansprüche, **dadurch gekennzeichnet, dass** jede Anode (7, 8) aus Blei und jede Kathode (5, 6) aus Gold hergestellt ist.

4. Sensor nach einem der vorhergehenden Ansprüche, **dadurch gekennzeichnet, dass** er außerdem elektronische Mittel besitzt, um die Differenz in der Leistungsabgabe der Zellen (2, 3) zu bestimmen.

5. Sensor nach Anspruch 4, **dadurch gekennzeichnet, dass** er außerdem Mittel zum Anzeigen der Leistungsabgabe der ersten Anode (8) anzeigt, wenn die genannte Differenz größer als ein erster bestimmter Wert ist.

6. Sensor nach Anspruch 4 oder 5, **dadurch gekennzeichnet, dass** er außerdem Mittel zum Beenden der Leistungsabgabe der zweiten Zelle (2) besitzt, wenn die genannte Differenz größer ist, als ein zweiter bestimmter Wert.

7. Sensor gemäß den Ansprüchen 4 bis 6, **dadurch gekennzeichnet dass** er außerdem Steuerungsmittel besitzt, wodurch die Leistungsabgabe der ersten Zelle (3) die Sauerstoffversorgung einer geschlossenen Umgebung, mit der der Sensor in Kontakt steht, steuert, wenn die genannte Differenz kleiner ist, als der erste bestimmte Wert.

8. Sensor nach einem der vorhergehenden Ansprüche, **dadurch gekennzeichnet, dass** jede Zelle eine Spannung abgibt.

9. Sensor nach einem der vorhergehenden Ansprüche, **dadurch gekennzeichnet, dass** er außerdem ein Gehäuse mit einer ersten und zweiten Abteilung besitzt, in denen jeweils die erste und die zweite Brennstoffzelle (2, 3) montiert ist.

10. Verfahren zum Betreiben eines Sauerstoffsensors der Art, die eine erste und eine zweite Zelle (2, 3) besitzt, wobei jede Zelle eine sauerstoffdurchlässige Membran (9, 10), die mit einer Umgebung in Kontakt steht, die erfasst werden soll, sowie eine elektrolytische Lösung, eine Kathode (5, 6) und eine oxydierbare Anode (7, 8), die in Kontakt mit der elektrolytischen Lösung stehen, besitzt, wobei die Zellen (2, 3) im wesentlichen identisch und unabhängig sind und wobei die erste Anode (8) im Oberflächenbereich wesentlich kleiner ist, als die zweite Anode (7), wodurch die Erschöpfung der ersten Anode (8) vor der Erschöpfung der zweiten Anode (7), und wobei die Leistungsabgabe jeweils der ersten und der zweiten Zelle erfasst wird, die Differenz zwischen den Leistungsabgaben überwacht wird und ein Signal abgegeben wird, wenn die Differenz größer als ein erster bestimmter Wert wird.

11. Verfahren nach Anspruch 10, **dadurch gekennzeichnet, dass** die Leistungsabgabe der zweiten Zelle (2) beendet wird, wenn die Differenz größer ist, als ein zweiter bestimmter Wert.

12. Verfahren nach Anspruch 10 oder 11, **dadurch gekennzeichnet, dass** der erste und der zweite Wert eine bestimmte Proportion der Leistungsabgabe der zweiten Zelle (2) ist.

**Revendications**

1. Détecteur d'oxygène comprenant des première et seconde cellules (2, 3), chaque cellule comportant une membrane perméable à l'oxygène (9, 10) en contact avec un environnement devant être détecté et une solution électrolytique, une cathode (5, 6) et une anode oxydable (7, 8) en contact avec ladite solution électrolytique, dans lequel les cellules (2, 3) sont sensiblement identiques et indépendantes, et la première anode (8) est substantiellement plus petite en aire de surface que la seconde anode (7) d'où il résulte que l'épuisement de la première anode (8) se produit avant l'épuisement de la seconde anode (7).

2. Détecteur selon la revendication 1, **caractérisé en ce que** l'aire de surface de la première anode (8) est de 80 à 98 % de celle de la seconde anode (7).

3. Détecteur selon l'une quelconque des revendications précédentes, **caractérisé en ce que** chaque anode (7, 8) est faite de plomb et **en ce que** chaque cathode (5, 6) est faite d'or.

**4.** Détecteur selon l'une quelconque des revendications précédentes, **caractérisé en ce qu'**il comprend en outre un moyen électronique destiné à déterminer la différence entre les sorties de chaque cellule (2, 3).

**5.** Détecteur selon la revendication 4, **caractérisé en ce qu'**il comprend en outre un moyen destiné à signaler l'épuisement de la première anode (8) lorsque ladite différence est supérieure à une première valeur prédéterminée.

**6.** Détecteur selon la revendication 4 ou la revendication 5, **caractérisé en ce qu'**il comprend en outre un moyen destiné à désactiver la sortie provenant de la seconde cellule (2) lorsque ladite différence est supérieure à une seconde valeur prédéterminée.

**7.** Détecteur selon les revendications 4 à 6, **caractérisé en ce qu'**il comprend en outre un moyen de commande grâce auquel la sortie provenant de ladite première cellule (3) commande une alimentation en oxygène vers un environnement enfermé avec lequel le détecteur est en contact lorsque ladite différence est inférieure à la première valeur prédéterminée.

**8.** Détecteur selon l'une quelconque des revendications précédentes, **caractérisé en ce que** chaque cellule (2, 3) produit une sortie de tension.

**9.** Détecteur selon l'une quelconque des revendications précédentes, **caractérisé en ce qu'**il comprend en outre un boîtier comportant des premier et second compartiments dans lesquels lesdites première et seconde cellules électrochimiques (2, 3) sont respectivement supportées.

**10.** Procédé de mise en oeuvre d'un détecteur d'oxygène du type comprenant des première et seconde cellules (2, 3), chaque cellule comportant une membrane perméable à l'oxygène (9, 10) en contact avec un environnement devant être détecté et une solution électrolytique, une cathode (5, 6) et une anode oxydable (7, 8) en contact avec ladite solution électrolytique, dans lequel les cellules (2, 3) sont sensiblement identiques et indépendantes, et la première anode (8) est substantiellement plus petite en aire de surface que la seconde anode (7) d'où il résulte que l'épuisement de la première anode (8) se produit avant l'épuisement de la seconde anode (7), et dans lequel une sortie provenant de chacune desdites première et seconde cellules est détectée, la différence entre lesdites sorties est surveillée et un signal est émis lorsque la différence devient supérieure à une première valeur prédéterminée.

**11.** Procédé selon la revendication 10, **caractérisé en ce que** la sortie provenant de la seconde cellule (2) est désactivée lorsque la différence est supérieure à une seconde valeur prédéterminée.

**12.** Procédé selon la revendication 10 ou la revendication 11, **caractérisé en ce que** lesdites première et seconde valeurs sont une proportion prédéterminée de la sortie de la seconde cellule (2).

**Figure 1**

Figure 2

**Figure 3**